# EUROPEAN PATENT SPECIFICATION

(11) **EP 2 705 917 B1**
(45) Date of publication and mention of the grant of the patent: **15.03.2017**
(21) Application number: 13174718.0
(22) Date of filing: 02.07.2013
(51) Int. Cl.: B23C 5/20, B23C 5/06

(54) **Milling insert and milling tool with such insert**
Fräseinsatz und Fräswerkzeug mit einem solchen Fräseinsatz
Plaquette de coupe de fraisage et outil de fraisage avec une telle plaquette

(30) Priority: 07.09.2012 SE 1251004
(43) Date of publication of application: 12.03.2014
(73) Proprietor: Sandvik Intellectual Property AB, 811 81 Sandviken (SE)
(72) Inventor: Sunnvius, Ulrik, SE-802 53 GÄVLE (SE)

(56) References cited:
- EP-A1- 2 412 464
- CN-A- 101 811 203
- CN-A- 102 500 806
- DE-C1- 10 006 431
- US-A1- 2009 290 946

## Description

### Technical Field of the Invention

In a first aspect, this invention relates to a milling tool according to the preamble of claim 1.

In a second aspect, the invention relates in addition to a milling insert according to the preamble of claim 14. An example of such a milling insert is known from EP 2 412 464 A1.

### Background of the Invention and Prior Art

Round milling inserts for milling purposes have the advantage in comparison with polygonal milling inserts having straight cutting edges in that they lack fragile corners. For this reason, the same are advantageously used in applications where the milling cutter should be able to mill off or remove large amounts of material from the workpiece without considerable requirements of surface smoothness of the generated surface. The fact that the round milling inserts as a consequence of their arched cutting edges giving rise to wave formations in the generated surface is accordingly incidental in comparison with the capacity of the milling inserts to remove deep material layers from the workpiece. Round milling inserts are found in single sided as well as double-sided embodiments, the first-mentioned ones of which are formed with cutting edges only along the upper sides and therefore can be given a positive insert macro geometry, while the insert macro geometry of the last-mentioned ones is negative as a consequence of cutting edges being formed along the upper side as well as the under side.

The invention only concerns itself with the first-mentioned type of milling inserts, i.e., single sided, indexable milling inserts having a round basic shape and positive insert macro geometry.

Generally, milling inserts having a positive insert macro geometry are more easy-cutting, concerning generated cutting force, than double-sided, negative milling inserts because the cutting edge is introduced under the chip so as to, like a knife or wedge, lift out and cut the chip rather than pushing the same in front of itself during shearing. Nevertheless, also single sided, round milling inserts are subjected to considerable cutting forces, among other things as a consequence of the chip obtaining an increasing thickness with increasing cutting depths. From a narrow end, the thickness of the chip increases to a maximum value, the absolute value of which depends on several factors, but above all the feed rate of the milling cutter per milling insert in the milling cutter body.

In order to strengthen the cutting edge of milling inserts in general, the same is usually formed with a chamfer surface in the transition between the clearance surface and the chip surface. In previously known milling inserts having a round basic shape, said reinforcing chamfer surface is of a uniform width along the entire periphery of the upper side (i.e., 360°). See, for instance, US 2009/0290946 A1. This means that the cutting edge along its entire operative arc length has one and the same geometry and strength irrespective of cutting depth and thereby irrespective of the shape of the generated chips. The cutting edge is as obtuse in the area where the chip is thin, as in the area where the same is thick. For this reason, the cutting forces will be unnecessary large at the same time as the wear-out of the cutting edge becomes uneven. To this, also the fact contributes that in general round milling inserts have one and the same nominal clearance angle along their entire circumferential, conical clearance surface, which means that the functional clearance angles, when the milling insert is mounted in the basic body, will vary and give rise to local temperature rises in the segments where the real clearance from the red-hot material of the workpiece becomes too small. Thus, the consequence of the same nominal clearance angle becomes an impaired service life of the milling insert.

### Objects and Features of the invention

The present invention aims at obviating the above-mentioned disadvantages of previously known milling tools by means of round and single sided milling inserts and at providing an improved tool and milling insert, respectively. Therefore, a primary object of the invention is to provide a milling insert that is as easy-cutting as possible and the cutting edge of which, in an operative state, is optimized in view of the nature of the generated chip. Another object is to provide a milling insert that works well for small as well as great cutting depths up to a recommended maximum depth.

According to the invention, at least the primary object is attained by the milling insert according to claim 14. Such a cutting insert is formed with a plurality of tangentially spaced-apart cutting edges, which individually fall archedly from a first end, situated closest to the reference plane of the upper side, to a lowest point, from which it rises toward a second end, besides which the inner boundary line of the chamfer surface diverges from the outer one so as to give the chamfer surface an increasing width in the direction from the first end of the cutting edge toward the second end thereof. In this way, the milling insert becomes easy-cutting on one hand as a consequence of the arc-shape of the cutting edge as viewed laterally (the cutting edge will because of this design carve into the material), and on the other hand as a consequence of the cutting edge being comparatively narrow and sharp in the area where the cutting depth is small and the chip narrow, but more obtuse and stronger with increasing cutting depth when the chip is thick, more precisely as a consequence of the increasing width of the chamfer surface from one end of the cutting edge toward the other.

### Terminology

Before the invention is further described, in order to provide conceptual clarity, certain concepts vital for the understanding of the invention should be made clear. When a feature is described as "nominal", the same solely relates to the milling insert as such, i.e., without coupling to the basic body of the tool, but if the same feature is denominated "functional", the same relates to the assembled state of the tool, i.e., with the milling insert mounted in a seat in the basic body. Furthermore, the concept "zero point" is used for the point along an active cutting edge that is farthest spaced apart in the axial direction from the basic body of the tool. In said zero point, the arched surface of the workpiece subjected to chip removal transforms into a generated or exposed surface that is approximately plane.

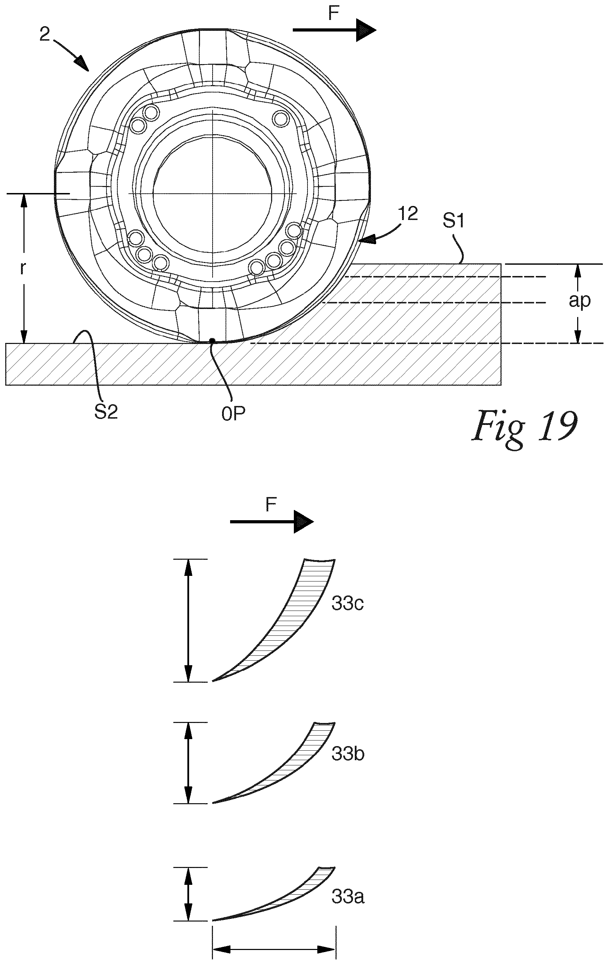

In this connection, reference is also made to Fig. 19, which illustrates the milling insert according to the invention during operation. In the figure, S1 designates an unmachined surface of a workpiece, while S2 designates the generated surface that is left after the chip removal. The arrow F indicates the feeding direction of the milling cutter, while aₚ designates the cutting depth in question.

### Brief Description of Possible Embodiments of the invention

In one embodiment of the invention, the individual cutting edge of the milling insert may form a chip removing main edge, which at its first end transforms into a wiper edge, which - when the milling insert is viewed in plane elevation toward the upper side - has a radius that is greater than the radius of the main edge, such as this is determined by the outer boundary line of the chamfer surface. By forming the milling insert with a wiper edge (the radius of which may approach ∞), a surface-wiping effect is obtained along the generated surface S2. In such a way, the milling tool can be used not only for the removal of large quantities of material from the workpiece, but also for providing a good surface finish of the generated surface. In other words, in such a way a versatile useful milling tool is provided, which may be utilized also in face milling operations, where requirements of surface finish are present.

In a further embodiment, the milling insert may be formed so that the nominal clearance angle thereof along the cutting edge decreases in the direction from the first end thereof - where the chamfer surface has its smallest width -toward the second end thereof. In such a way, an approximately uniform functional clearance is obtained against the workpiece, along the active arc length of the cutting edge, independently of the cutting depth.

In yet an embodiment, the nominal rake angle of the cutting edge increases in the direction from the first end toward the second one. In such a way, the rake angle becomes greater (a person skilled in the art would say "more positive") toward the strongest portion of the cutting edge, i.e., where the chamfer surface has its greatest width. When the width of the chamfer surface is large, a satisfactory cutting edge strength is obtained, which decreases the need of a small rake angle, for the purpose of providing a durable cutting edge, and therefore a greater, more positive rake angle can be used to reduce the generated cutting force.

In a combined embodiment, the cutting edge angle of the cutting edge - such as this is defined by the angle between the chip surface and the clearance surface in arbitrary sections along the cutting edge - may decrease in the direction from the first end of the cutting edge toward the second end thereof so as to, in such a way, combine the effects of the above-mentioned reduction of the clearance angle and the increase of the rake angle of the cutting edge.

In one embodiment, the individual chamfer surface may include two part surfaces that are separated by a dividing line from which the outer boundary line as well as the inner one diverges in the direction from the first end of the cutting edge toward the second one. In such a way, the chip removal is facilitated also along those segments of the cutting edge where the chamfer surface has its greatest total width. This embodiment entails the good effect that the cutting forces (and to a certain extent the generation of heat) are reduced in comparison with the feasible embodiment that makes use of a single, continuous chamfer surface.

In yet an embodiment, the chamfer surface included in the cutting edge may have a greatest width that is at least twice as large as its smallest width. In such a way, a good strength is guaranteed of the most exposed portion of the cutting edge.

When the chamfer surface is broken, the outer part surface thereof may have a width that in a section closest to the first end of the cutting edge is greater than the width of the inner part surface, but that in a section closest to the second end has a width that is smaller than the width of the inner part surface. In such a way, an optimum strength is combined with an optimum chip removal capacity in the different segments of the cutting edge.

In yet an embodiment, the arc length of the chamfer surface in question may amount to at least 75 % of the total arc length that each cutting edge occupies of the 360° periphery of the upper side. In such a way, the milling insert can operate with a recommended maximum cutting depth that is considerably greater than half of the radius of the milling insert.

Furthermore, the outer part surface of a broken chamfer surface may have an angle to the upper reference plane that increases in the direction from the first end of the cutting edge toward the second end thereof. In such a way, an optimum combination of the chip removal capacity of the cutting edge and strength of different segments along the cutting edge is attained by the fact that the first contact of the cutting edge with the material takes place further from the still weaker area outermost of the cutting edge, i.e., the intersection between clearance surface and chip surface.

In yet an embodiment, the lock means, which have the purpose of rotationally securing the milling insert in an appurtenant seat in the basic body of the tool, may be a connecting surface that is formed in the under side of the milling insert and includes a plurality of radially oriented ridges and countersinks between the same. Such a connecting surface guarantees that the exact spatial position of the milling insert in relation to the tool body is obtained also after indexings and repeated insert replacements.

Furthermore, a plurality of tangentially spaced-apart and plane side contact surfaces may be formed in the envelope surface of the individual milling insert. By forming the milling insert with such side contact surfaces at the same time as the seat in the basic body is formed with a pair of complementary side support surfaces, a pressure-relief is attained of the stresses that in operation are applied to a screw, if such a one forms a tightening device for the fixation of the milling insert.

In the last-mentioned embodiment, the side contact surfaces of the milling insert may advantageously be located in the same radial plane as the ridges of the connecting surface of the milling insert. In such a way, the side contact surfaces may be located in the area under the wiper edges, where the milling insert has its greatest thickness and is strongest. In these areas, also the ends of the individual cutting edge are situated, which means that the side contact surfaces are separated from the lowest point (usually the centre) of the cutting edge, where the flank wear-out is great because of a great thickness of chip.

### Brief Description of the Appended Drawings

In the drawings:
- Fig. 1: is a perspective exploded view showing a milling tool according to the invention as viewed from below and having an appurtenant milling insert as well as a fixing screw shown spaced-apart from a seat in the basic body of the tool,
- Fig. 2: is a side view of the tool,
- Fig. 3: is a planar view from below of the same tool,
- Fig. 4: is an enlarged, perspective exploded view showing a seat included in the basic body as well as a milling insert exploded away in worm's eye view as well as bird's eye view,
- Fig. 5: is a bird's eye view of only the milling insert,
- Fig. 6: is a worm's eye view of the same milling insert,
- Fig. 7: is a side view of the milling insert,
- Fig. 8: is a planar view showing the under side of the milling insert,
- Fig. 9: is a planar view showing the topside of the milling insert,
- Fig. 10: is a schematic side view illustrating basic geometrical facts of the milling insert,
- Fig. 11: is a sector-shaped enlargement of a part of the upper side of the milling insert,
- Fig. 12: is an enlarged detailed side view showing the upper part of a clearance surface included in the milling insert,
- Figs. 13a/b: are enlarged detail sections (on different scales) showing the cross section shape of the cutting edge of the milling insert in the section A in Fig. 11,
- Figs. 14a/b, Figs. 15a/b, Figs. 16a/b and Figs. 17a/b: are analogous detail sections of the sections D-E in Fig. 11,
- Fig. 18: is an additional detailed view showing an enlarged, sector-shaped portion of the upper side of the milling insert,
- Fig. 19: is a picture showing a milling insert during operation, and
- Figs. 20a/b: are schematic illustrations of the chip formation of milling inserts having non-uniform chamfer surfaces along the cutting edges.

### Detailed Description of an Embodiment of the Invention

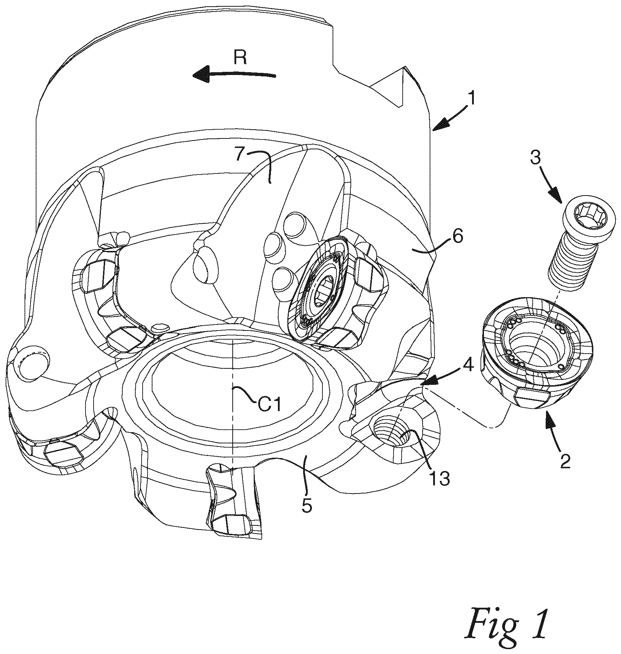

In Figs. 1-4, a milling tool is shown having a round milling insert, formed in accordance with the invention. The tool includes a basic body 1 in the form of a milling cutter head as well as a plurality of milling inserts 2. In the tool, tightening devices in the form of screws 3 are also included, which have the purpose of fixing the milling inserts in a number of seats 4 in the basic body 1. The basic body includes front and rear ends, between which a centre axis C1 extends on which the basic body is rotatable. Of the two ends, the front one is designated 5. The seats 4 are formed in the peripheral transition between the front end 5 of the basic body and an envelope surface designated 6, which is rotationally symmetrical in respect of the centre axis C1. In front of each seat 4 - as viewed in the direction of rotation R - there is also a chip channel 7 for each milling insert.

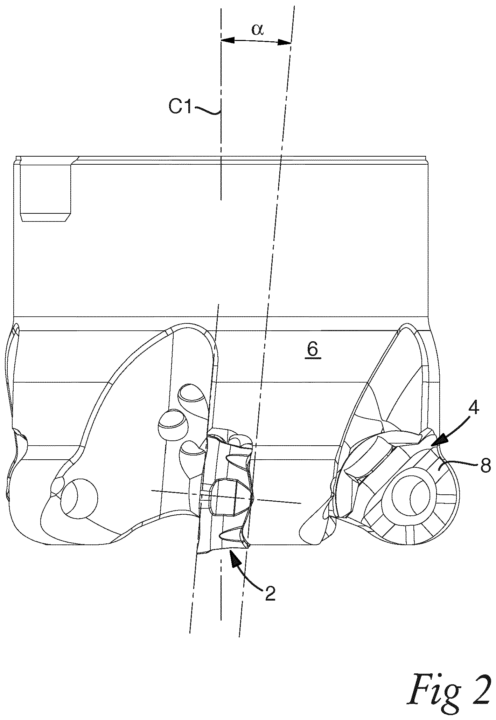

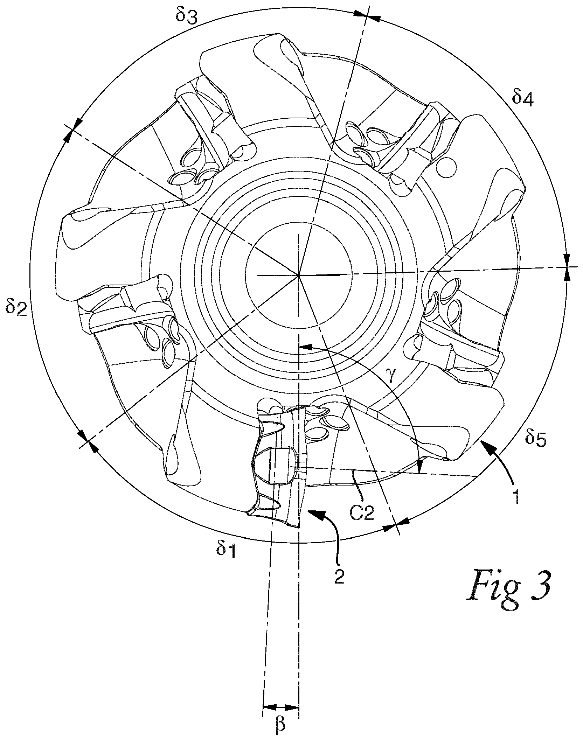

In Figs. 2 and 3, it is seen that each individual milling insert 2 is located in a spatial position that is tipped-in in the basic body and determined by two different angles α and β, α of which is the axial tipping-in angle of the milling insert, while β is the radial tipping-in angle. In the example, the axial tipping-in angle α is positive so far that the plane thereof leans obliquely upward/rearward in relation to the centre axis C, while the radial tipping-in angle β is negative. In the embodiment shown, α amounts to approx. +5°, which by a person skilled in the art is considered as a moderate angle, which entails that the milling insert obtains a good support against a bottom support surface 8 included in the seat 4, without because of this waiving the functional clearance along the active cutting edge of the milling insert. In practice, α may vary upward as well as downward. However, the same should not exceed +15°. The same may also be moderately negative, i.e., lean obliquely upward/forward in the direction of rotation. However, a possible negative tilt should not be greater than -5 ° or/to -10°.

The radial tipping-in angle β should always be negative, i.e., not exceed 0°. In the example, β amounts to -5°. In practice, β may vary between 0°and -15°.

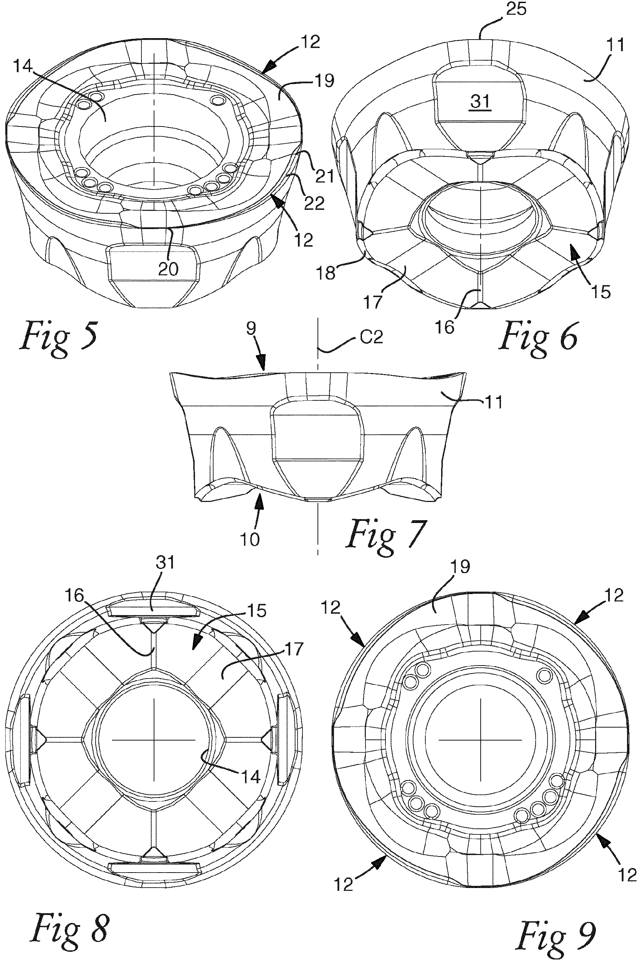

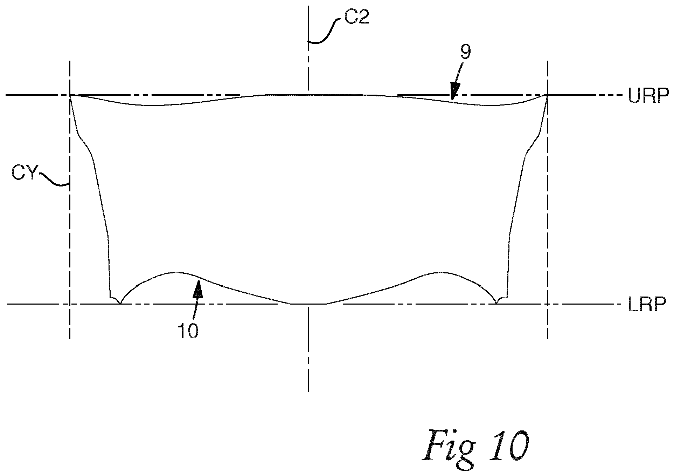

Reference is now made to Figs. 5-10, which more in detail illustrate the nature of the milling insert 2. Basal features of the milling insert are that the same includes an upper side 9, an under side 10 as well as a circumferential clearance surface 11, which generally is rotationally symmetrical in respect of a centre axis C2, and which extends between the upper and under sides. At least closest to the upper side 9, the clearance surface, in its entirety designated 11, converges toward the under side to provide a positive insert macro geometry of a cutting edge, generally designated 12, that in a traditional way is formed in the transition between the upper side and the lateral, endless clearance surface 11. As seen in Fig. 10, the situation of the upper and under sides 9, 10 in the milling insert is defined by upper and lower reference planes designated URP and LRP, respectively. These planes are mutually parallel by extending perpendicular to the centre axis C2. The last-mentioned one is a centre axis of an imaginary cylinder CY, which circumscribes the periphery of the upper side and thereby defines the round basic shape of the milling insert. In connection with Fig. 10, it should be pointed out that the upper reference plane URP is touched by a number of levelled points situated highest in the upper side, while the lower reference plane LRP in an analogous way is touched by a number of points that are situated lowest in the milling insert.

With renewed reference to Figs. 1-4, it should be pointed out that the basic body 1 includes totally five seats, which, in order to counteract vibrations in the tool, is placed with a differentiated spacing. In the example, accordingly the pitch angle δ1 amounts to 73 °, δ2 to 71°, δ3 to 72°, δ4 to 73,5°, and δ5 to 70,5°. Furthermore, it should be pointed out that a hole 13 having a female thread for the male thread of the screw 3 mouths in the bottom support surface 8 of the seat 4.

Although different types of tightening devices, such as clamps, may be used to fix the milling insert in the appurtenant seat, screws are used in the example in question. For this reason, the milling insert is formed with a through hole 14, the centre axis of which coincides with the centre axis C2 of the milling insert. As mentioned by way of introduction, the milling insert includes lock means for rotationally securing the same in the seat. In the example shown, this means is a connecting surface 15 formed in the under side 10 of the milling insert. Said connecting surface includes a plurality of ridges 16 that are mutually separated via countersinks or valleys 17, the first-mentioned ones of which form male-like engagement members and the last-mentioned ones female-like ones. As clearly seen in Figs. 6 and 8, the ridges 16 as well as the valleys 17 extend radially in the direction from inner ends adjacent to the hole 14 toward outer ends adjacent to a circumferential transition surface 18 between the under side of the milling insert and the clearance surface 11.

In the transition between the upper side 9 of the milling insert and the circumferential clearance surface 11, a plurality of, more precisely four, cutting edges 12 are formed, which are tangentially spaced-apart from each other, and each one of which occupies % of the 360° periphery of the upper side. In other words, the spacing between the cutting edges amounts in this case to 90°.

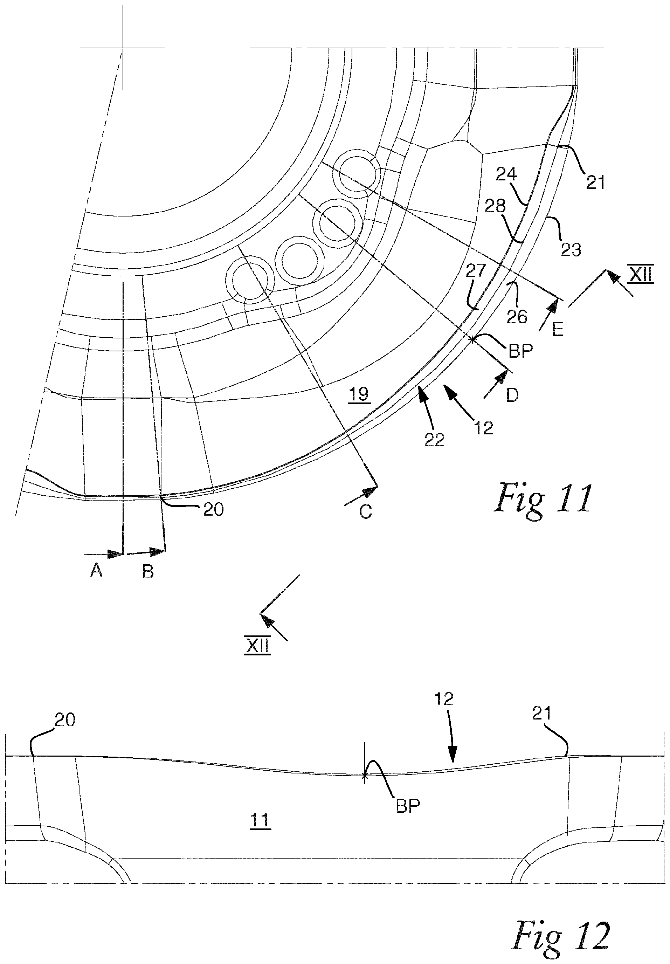

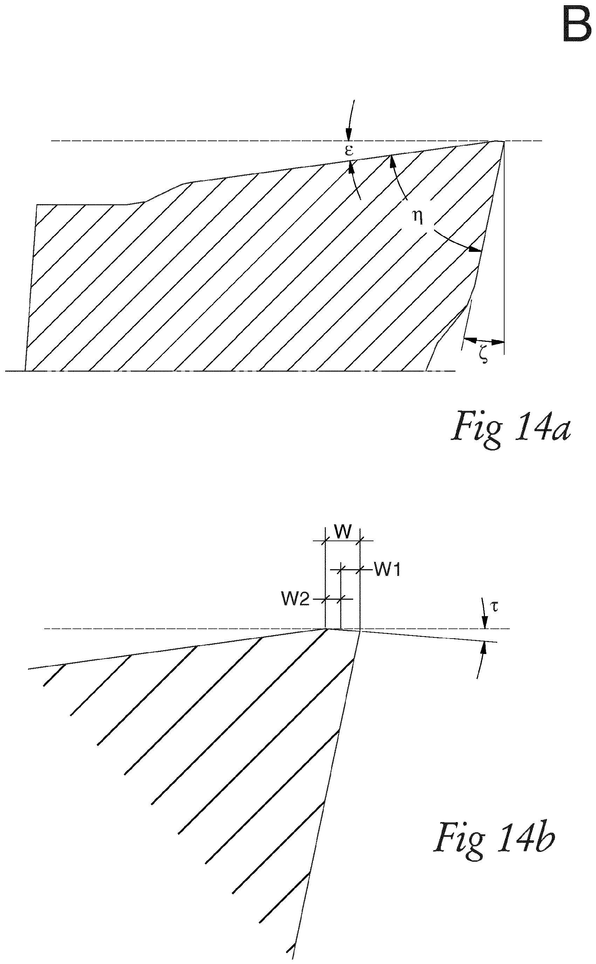

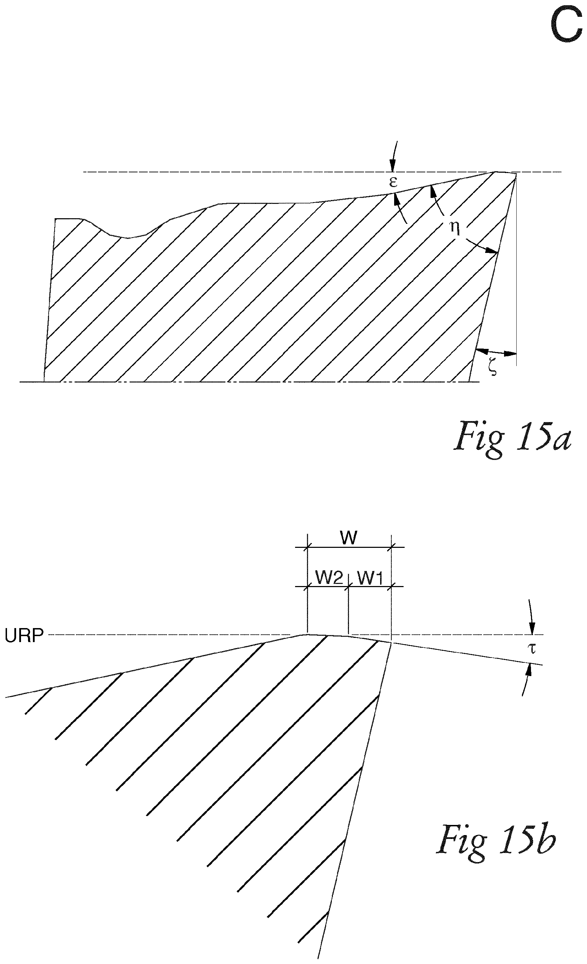

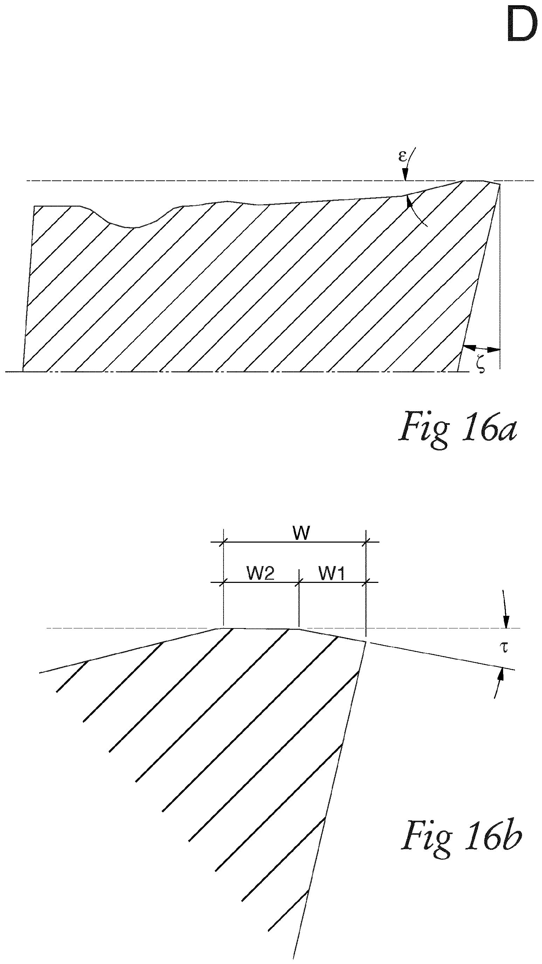

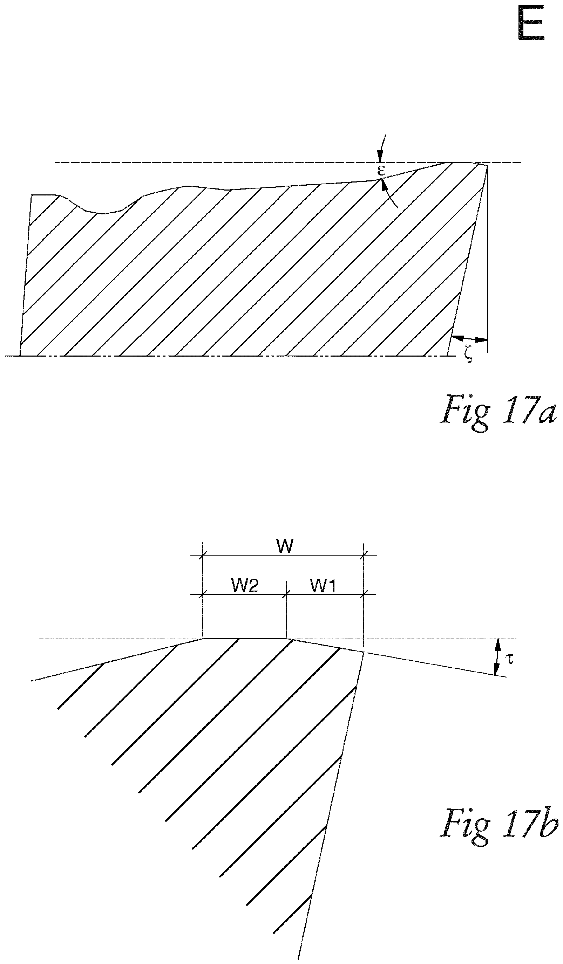

Reference is now made to Figs. 11-18, which in more detail illustrate the design of the cutting edge 12. In Fig. 11, an enlarged, sector-shaped portion of the upper side of the milling insert is shown, more precisely as viewed in plane elevation from above. In the figure, it is seen that the cutting edge extends between first and second ends 20 and 21, respectively. In the cutting edge 12, which is formed between a chip surface 19 included in the upper side 9 and the circumferential clearance surface 11, a chamfer surface, in its entirety designated 22, is included, which is delimited against the clearance surface 11 via an outer boundary line 23, and against the chip surface 19 via an inner boundary line 24.

Two primary features characterizes the cutting edge 12, *viz.* that it falls archedly from the first end 20 to a lowest point or bottom point BP, from which it again rises toward the second end 21, as well as that the inner boundary line 24 of the chamfer surface 22 diverges from the outer one so as to give the chamfer surface an increasing width in the direction from the first end 20 of the cutting edge toward the second end 21. Already as a consequence of the round basic shape of the milling insert, the outer boundary line 23 is arched as viewed in plane elevation according to Fig. 11. Also as viewed in side elevation (according to Fig. 12), the boundary line extends archedly between the ends 20, 21 of the cutting edge. In other words, the boundary line 23 - and thereby the cutting edge 12 as such - is arched in two different co-ordinate directions.

The cross-sectional shape of the cutting edge and chamfer surface in different segments between the ends 20, 21 is illustrated in a number of detail sections, which will be described later. Before this taking place, it should, however, be pointed out that the cutting edge 12, at its first end 20, transforms into a secondary edge or wiper edge 25, which has the purpose of wiping off or levelling the surface generated during milling. Thus, in the example shown, the cutting edge 12 forms a main edge, which guarantees the chip removal, while the secondary edge 25 forms a wiper edge having the purpose of wiping off or levelling the generated bottom surface S2 (see Fig. 19).

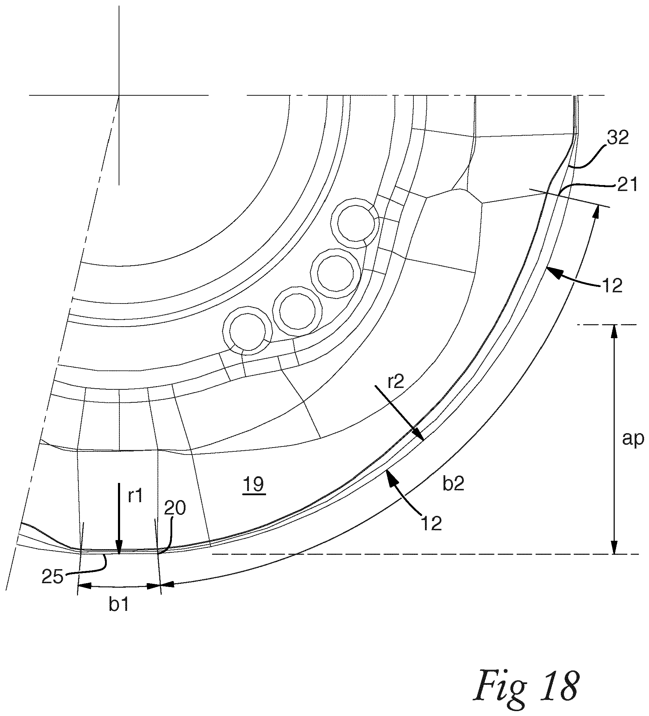

As seen in Fig. 18, the secondary edge 25 has an arc length b1 that only constitutes a fraction of the arc length b2 of the main edge 12. Furthermore, the radius r1 of the secondary edge 25 is considerably greater than the radius r2 of the cutting edge 12. The last-mentioned radius r2 amounts essentially to half of the diameter of the milling insert, while r1 in practice may approach ∞. In other words, the secondary edge 25 may have an approximately straight shape (however without becoming absolutely straight).

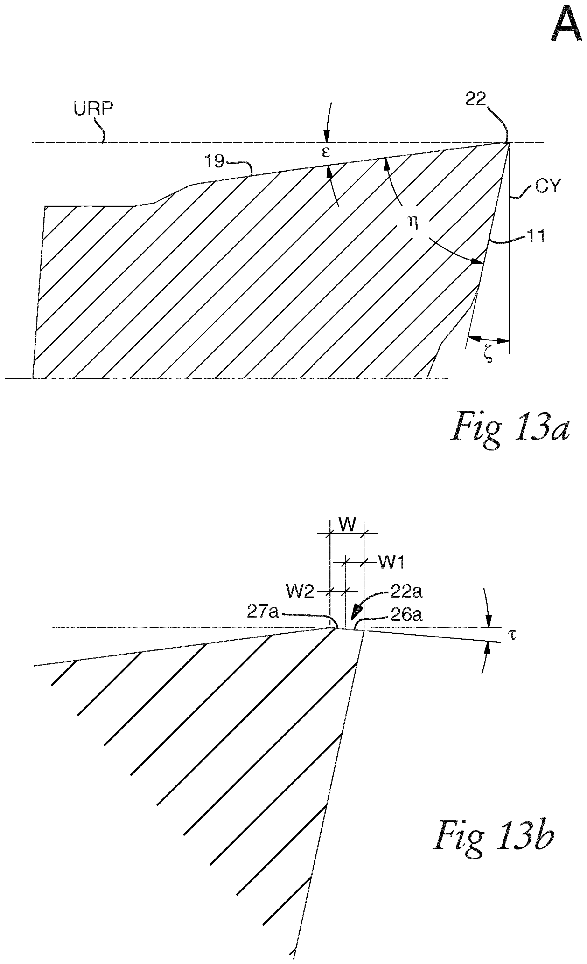

Reference is now made to Figs. 13a-17b, which illustrate not only the cross-sectional shape of the secondary edge 25, but also the varying shape of the main edge 12 in different sections between the ends 20, 21. In the different figures, ε designates a rake angle, i.e., the angle that the chip surface 19 forms with the upper reference plane URP, while ζ designates the clearance angle that the clearance surface 11 forms with a vertical reference line or the geometrical cylinder CY. The rake angle ε as well as the clearance angle ζ varies along the periphery of the milling insert.

Although it is possible within the scope of the invention to form the chamfer surface 22 delimited between the boundary lines 23, 24 as a single continuous surface, in the example, it has been preferred to give the same a broken shape. Thus, the chamfer surface 22 includes two part surfaces 26, 27 (see Fig. 11) that are separated by a dividing line 28 from which the outer boundary line 23 as well as the inner 24 diverge, more precisely in the direction from the first end 20 of the cutting edge toward the second one 21. In this connection, it should particularly be pointed out that also the wiper edge 25 includes a reinforcing chamfer surface 22a, which is broken into two part surfaces 26a, 27a (see Fig. 13b).

The section B is situated at the first, narrow end 20 of the cutting edge 12, while the sections C, D and E are located closer to the opposite end 21. More precisely, the section D is placed in the vicinity of the bottom point BP, while the section E is placed closer to the end 21, although spaced apart clockwise from the same. The radially outer part surface 26 of the chamfer surface 22 forms (as well as the corresponding part surface 26a along the wiper edge 25) an angle, designated η, with the reference plane URP. By those skilled in the art, said angle is denominated "negative bevel angle".

Below, a list follows of the concrete angle measures of the different sections A-E that are found in a prototype embodiment of the invention, more precisely a milling insert having an IC measure (i.e., diameter) of 12 mm. In addition, the varying width (W) of the chamfer surface 22 and the width (W1, W2) of the two part surfaces along the cutting edge are indicated in the list.

| SECTION | ε [°] W2 [mm] | ζ [°] | η [°] | τ [°] | W [mm] | W1 [mm] |
|---|---|---|---|---|---|---|
| A | 7,42 | 12,04 | 70,54 | 5,08 | 0,054 | 0,031 |
| | 0,023 | | | | | |
| | | | | | | |
| B | 7,76 | 11,58 | 70,66 | 4,58 | 0,054 | 0,030 |
| | 0,024 | | | | | |
| | | | | | | |
| C | 12,02 | 13,00 | 64.98 | 8,47 | 0,539 | 0,275 |
| | 0,264 | | | | | |
| | | | | | | |
| D | 14,04 | 12,89 | 63,07 | 10,67 | 0,227 | 0,107 |
| | 0,120 | | | | | |
| | | | | | | |
| E | 13,99 | 11,99 | 64,02 | 10,02 | 0,292 | 0,126 |
| | 0,136 | | | | | |

From the above list, it is seen that the cutting edge angle η of the cutting edge -such as this is defined by the angle between the chip surface 19 and the clearance surface 11 - decreases in the direction from the first end 20 toward the second one 21. This reduction of the cutting edge angle is commenced in the section B, i.e., at the first end 20 and continues up to and past the section D, i.e., a distance past the lowest situated point BP of the cutting edge. Said reduction of the cutting edge angle is, above all, caused by an increase of the rake angle ε, at the same time as the clearance angle ζ remains in all essentials constant (between 12° and 13°). From the list, it is further seen that the outer part surface 26 of the chamfer surface 22 has a width W1, which in sections closest to the first end 20 of the cutting edge is greater than the width W2 of the inner part surface 27. In an area between the sections C and D, however, this relation is altered so far that the width W1 of the outer part surface 26 becomes successively smaller than the width of the inner part surface the closer to the end 21 the sections are situated. In the exemplified embodiment, the chamfer surface has a greatest width W that is approx. ten times greater than its smallest width (cf. the values of the sections B and C). It is true that said relation may vary, but at all events the greatest width should be at least twice as large as the smallest one. The chamfer surface has its maximal width in an area between the sections C and D.

In Fig. 18, it is seen that the arc length b2 of the cutting edge between the ends 20 and 21 occupies the major part of the 90° that each one of the four cutting edges occupies of the 360° periphery of the upper side. In the example, the cutting edge occupies approx. 90 % of the 90° available. At its wide, upper end 21, the cutting edge 12 transforms into an adjacent wiper edge via a tapering transition portion, the geometrical shape of which lacks importance because no chip removal will take place in this part of the milling insert. Also, the co-operating wiper edge 25 occupies a certain part of the available 90°. At all events, however, the arc length of the chip removing cutting edge 22 should not be less than 75 % of the available arch.

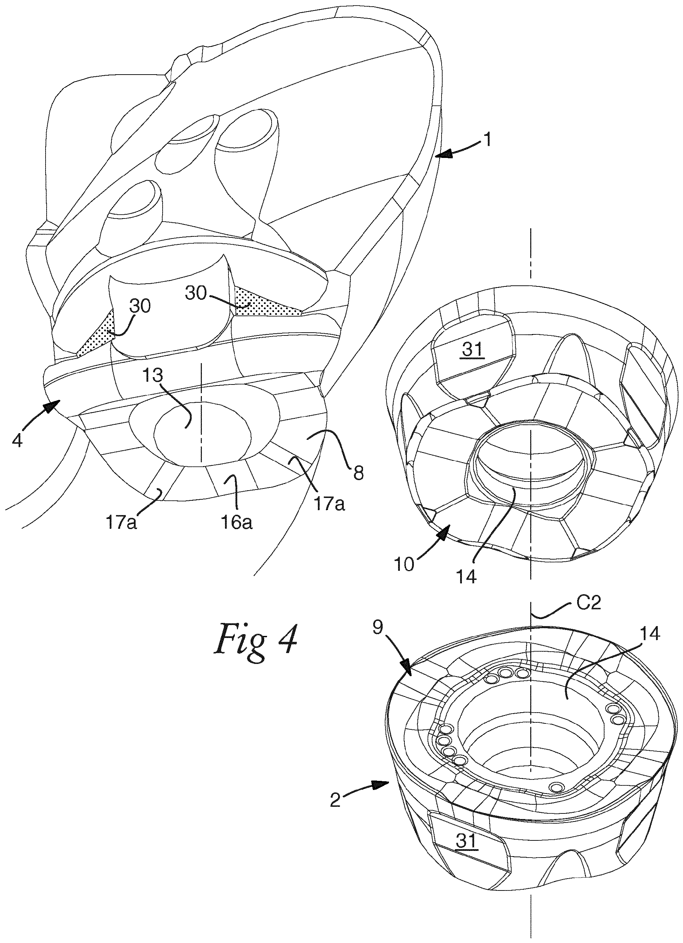

In Fig. 4, it is seen that the bottom surface 8 of the seat 4 forms a connecting surface, which like the connecting surface 15 of the milling insert includes ridges 16a surrounded by valleys 17a. These ridges and valleys form male and female, respectively, members arranged to co-operate with the ridges and the valleys in the connecting surface of the milling insert, more precisely in such a way that the individual ridge 16 of the milling insert engages a valley 17a in the connecting surface 8 of the seat, while the ridges 16a of the connecting surface of the seat engage the valleys 17 in the milling insert. It should be noted that the two connecting surfaces in this case are essentially ring-shaped and surround the holes 13, 14 in the seat and the milling insert, respectively. In addition to the connecting surface 8 serving as bottom, also two side support surfaces 30 are included in the seat 4, which are plane and intended to co-operate with a pair of plane side contact surfaces 31 of the clearance surface 11 of the milling insert. Because the milling insert includes four cutting edges and should be indexable in four positions, the milling insert includes four such side contact surfaces 31, only two of which - depending on the index position - are kept pressed against the side support surfaces 30. Primarily, the male and female members of the connecting surfaces 8, 15 counteract rotation of the milling insert, while the contact between the side support surfaces 30 and the side contact surfaces 31 has the purpose of relieving the pressure on the tightening screw 3 so that the same is not deformed under load.

As seen in Figs. 4-7, the side contact surfaces 31 of the milling insert have a limited height in order to be housable under the cutting edge that is delimited by the upper portion of the clearance surface 11. In accordance with a preferred embodiment of the invention, the side contact surfaces 31 are placed in the same radial plane as the ridges 16 of the connecting surface 15. In one and the same radial plane as the ridge and the side contact surface 31, also the wiper edge 25 is situated. The consequence of this is that the side contact surfaces 31 are formed in those portions of the milling insert that have maximum thickness. Thus, the secondary edges 25 and the connections thereof to the surrounding cutting edges 22 are the highest situated points of the milling insert, which are tangent to the upper reference plane URP. From the wiper edges, the main edges fall in relation to the upper reference plane, and in an analogous way the periphery of the lower connecting surface 15 rises, such as this is represented by the transition surface 18 in the areas that are situated between the ridges 16, i.e., where the valleys 17 are situated. In other words, the milling insert has its smallest thickness in an area approximately halfway between two side contact surfaces 31.

### The Function and Advantages of the invention

Reference is now made to Fig. 19, which schematically illustrates the function of a milling insert included in the milling tool during operation. In the figure, F designates the feeding direction of the milling cutter. For a given feed, the operative cutting edge 22 will remove chips 33a, 33b and 33c, the shape/thickness of which vary depending on the selected cutting depth ap. If the cutting depth is small, the chip (see 33a) will be comparatively thin even if its thickness increases from one end to the other. With an increasing cutting depth, the thickness of the chips (33b, 33c) increase successively up to a maximum thickness that corresponds to a maximum, recommended cutting depth. This recommended maximum depth may, *per se,* vary in different applications. However, the cutting depth ap should not exceed 2/3 of the radius r of the milling insert.

In Fig. 19, OP designates the zero point (situated 6 o'clock) in which the chip removing effect of the cutting edge 22, via the wiper edge 20, transforms into a surface-wiping effect along the generated surface S2.

By forming the individual cutting edge in the way described above, its chip removing capacity is optimized independently of the selected cutting depth. If the cutting depth is small, only the pointed and easy-cutting part of the cutting edge, which is situated closest to the wiper edge, starts to function. In these circumstances, the cutting forces are limited, and therefore said part of the cutting edge is not subjected to any greater cutting forces tending to wear out or damage the milling insert. If the thickness of the chip - as a consequence of an increased cutting depth - increases, the cutting edge is subjected to greater cutting forces, in particular where the cutting depth is greatest and the chip thickest. Also in these circumstances, the cutting edge is durable because the chamfer surface thereof will be wider and wider from the wiper edge toward the upper end of the cutting edge. However, the cutting edge does not lose its easy-cutting capacity because the arched sagging of the cutting edge in relation to the upper reference plane of the milling insert ensures that the functional axial angle of the cutting edge increases, and thereby compensates a moderate axial tipping-in angle.

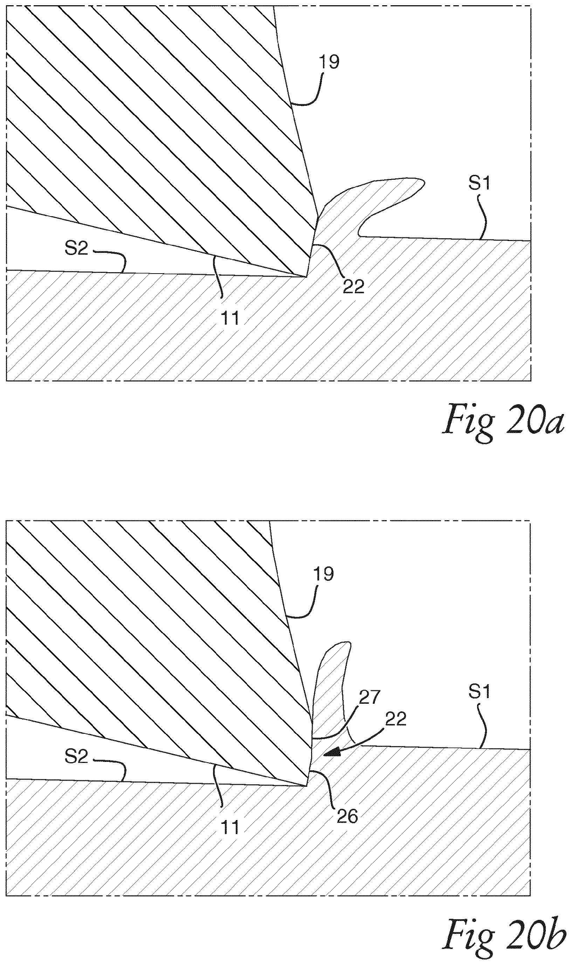

In Figs. 20a and 20b, there is illustrated a comparison between a cutting edge, the chamfer surface 22 of which is continuous and a cutting edge having a broken one, i.e., a chamfer surface that - in accordance with the described embodiment - includes two part surfaces 26, 27 oriented at an obtuse angle to each other. In the first-mentioned case (Fig. 20a), the chip, which is subject to removal, will be folded down in the forward direction from the cutting edge. This means that the cutting forces become greater than in the case that is shown in Fig. 20b. By the fact that the inner part surface 27 is angled downward/rearward in relation to the outer part surface 26, the chip will be guided more inward toward the centre of the milling insert (upward in Fig. 20b). In such a way, the chip will slide easier along the cutting edge, whereby the cutting forces are reduced.

## Claims

1. Milling tool comprising on one hand a basic body (1) having front and rear ends, between which there extend an envelope surface (6) and a centre axis (C1) on which the basic body is rotatable, and on the other hand a plurality of single sided and indexable milling inserts (2) having a round basic shape, which individually comprise an upper side (9), an under side (10), and a clearance surface (11) that extends between the same and, at least closest to the upper side (9), converges toward the under side (10) in order to provide a positive cutting geometry of a cutting edge (12) positioned between the clearance surface (11) and a chip surface (19) included in the upper side (9), which cutting edge includes a reinforcing chamfer surface (22) that is delimited against the clearance surface (11) via an outer boundary line (23) and against the chip surface (19) via an inner boundary line (24), wherein the milling insert (2) is formed with a plurality of tangentially spaced-apart cutting edges (12), and wherein the inner boundary line (24) of the chamfer surface (22) diverging from the outer one (23) so as to give the chamfer surface an increasing width in the direction from the first end (20) of the cutting edge toward the second end (21) thereof, the nominal situation of the upper and under sides (9, 10) in the milling insert (2) being determined by upper and lower reference planes (URP, LRP), each one of which extends perpendicular to a centre axis (C2) of an imaginary cylinder (CY) that circumscribes the periphery of the upper side (9) and thereby defines the round basic shape of the milling insert (2), the individual milling insert (2) being fixed in a seat (4) formed in a transition between the front end (5) of the basic body (1) and the envelope surface (6) thereof, more precisely by means of, on one hand, a tightening device (3), and on the other hand co-operating lock means in the seat of the basic body as well as in the milling insert so as to counteract rotation of the last-mentioned one, the milling insert being located in a spatial position that is tipped-in in the basic body and determined by an axial tipping-in angle (α) as well as by a radial one (β), **characterized in that** the cutting edges (12) of the milling insert (2) individually fall archedly from a first end (20), situated closest to the upper reference plane (URP) of the milling insert, to a lowest point (BP), from which it rises toward a second end (21).

2. Milling tool according to claim 1, **characterized in that** the individual cutting edge (12) of the milling insert (2) forms a chip removing main edge, which at its first end (20) transforms into a wiper edge (25), which - when the milling insert is viewed in plane elevation toward the upper side - has a radius (r1) that is greater than the radius (r2) of the main edge, such as this is determined by the outer boundary line (23) of the chamfer surface.

3. Milling tool according to claim 1 or 2, **characterized in that** the individual cutting edge (12) of each milling insert (2) is formed with a cutting edge angle (η) - such as this is defined by the angle between the chip surface (19) and the clearance surface (11) - that decreases in the direction from the first end (20) toward the second one (21).

4. Milling tool according to claim 3, **characterized in that** the nominal rake angle (ε) of the cutting edge (12) increases in the direction from the first end (20) toward the second one (21), while the clearance angle (ζ) is essentially constant.

5. Milling tool according to any one of the preceding claims, **characterized in that** the chamfer surface (22) of the cutting edge (12) is broken by including two part surfaces (26, 27) that are separated by a dividing line (28) from which the outer boundary line (23) as well as the inner one (24) diverges in the direction from the first end (20) of the cutting edge toward the second one (21), the radially outer part surface (26) forming a greater, negative angle (τ) with the upper reference plane (URP) than the inner one (27).

6. Milling tool according to any one of the preceding claims, **characterized in that** the chamfer surface (22) of the cutting edge (12) has a greatest width (W) that is at least twice as large as its smallest width.

7. Milling tool according to claim 5, **characterized in that** the outer part surface (26) of the chamfer surface (22) has a width (W1), which in sections closest to the first end (20) of the cutting edge is greater than the width of the inner part surface (27), but which in sections closer to the second end (21) has a width (W1) that is smaller than the width (W2) of the inner part surface (27).

8. Milling tool according to any one of the preceding claims, **characterized in that** the chamfer surface (22) of the cutting edge (12) has an arc length (b2) of at least 75 % of the total arc length that each cutting edge (12) occupies of the 360° periphery of the milling insert.

9. Milling tool according to claim 5 or 7, **characterized in that** the angle (τ) of the outer part surface (26) to the upper reference plane (URP) of the milling insert increases in the direction from the first end (20) of the cutting edge toward the second one (21).

10. Milling tool according to any one of the preceding claims, **characterized in that** the lock means for rotationally securing the milling insert (2) in the individual seat (4) of the basic body comprises on one hand a first connecting surface that is formed in a bottom (8) of the individual seat and includes a plurality of radially oriented ridges (16) and countersinks (17) between the same, and on the other hand a second connecting surface that is formed in the under side of the milling insert and in the same way includes ridges and countersinks, the first-mentioned ones of which engage the countersinks of the first connecting surface at the same time as the last-mentioned ones receive the ridges of the first connecting surface.

11. Milling tool according to any one of the preceding claims, **characterized in that**, in the envelope surface of the individual milling insert, a plurality of tangentially spaced-apart side contact surfaces are formed, two of which are pressed against each a side support surface in the seat.

12. Milling tool according to claim 10 and 11, **characterized in that** the side contact surfaces of the milling insert are located in the same radial plane as the ridges of the connecting surface of the milling insert.

13. Milling tool according to any one of the preceding claims, **characterized in that** the operative cutting edge (12) of the milling insert (2) has its first end (20) situated at a greater axial distance from the rear end of the basic body (1) than its second end (21), and the operative cutting edge (12) of the milling insert (2) having its first end (20) situated at a shorter radial distance from the centre axis (C1) of the basic body (1) than its second end (21).

14. Single sided, indexable milling insert having a round basic shape comprising an upper side (9), an under side (10), and a clearance surface (11) that extends between the same and, at least closest to the upper side (9), converges toward the under side (10) in order to provide a positive cutting geometry of a cutting edge (12) positioned between the clearance surface (11) and a chip surface (19) included in the upper side (9), which cutting edge includes a reinforcing chamfer surface (22) that is delimited against the clearance surface (11) via an outer boundary line (23) and against the chip surface (19) via an inner boundary line (24), the situation of the upper and under sides being defined by upper and lower reference planes (URP, LRP), each one of which extends perpendicular to a centre axis (C2) of an imaginary cylinder (CY) that circumscribes the periphery of the upper side (9) and thereby defines the round basic shape of the milling insert, the milling insert including lock means for rotationally securing the same, wherein the milling insert is formed with a plurality of tangentially spaced-apart cutting edges (12), and wherein the inner boundary line (24) of the chamfer surface diverges from the outer one (23) to give the chamfer surface (22) an increasing width in the direction from the first end (20) of the cutting edge toward the second end (21) thereof,
**characterized in that** the cutting edges (12) individually fall archedly from a first end (20), situated closest to the upper reference plane (URP), to a lowest point (BP), from which it rises toward a second end (21).

15. Milling insert according to claim 14, **characterized in that** said cutting edge forms a chip removing main edge (12), which at its first end (20) transforms into a wiper edge (25), which - when the milling insert is viewed in plane elevation toward the upper side - has a radius (r1) that is greater than the radius (r2) of the main edge, such as this is determined by the outer boundary line (23) of the chamfer surface.

16. Milling insert according to claim 14 or 15, **characterized in that** the individual cutting edge (12) of each milling insert (2) is formed with a cutting edge angle (η) - such as this is defined by the angle between the chip surface (19) and the clearance surface (11) - that decreases in the direction from the first end (20) toward the second one (21).

17. Milling insert according to any one of claims 14-16, **characterized in that** the nominal rake angle (ε) of the cutting edge (12) increases in the direction from the first end (20) toward the second one (21), while the clearance angle (ζ) is essentially constant.

18. Milling insert according to any one of claims 14-17, **characterized in that** the individual chamfer surface (22) is broken by including two part surfaces (26, 27) that are separated by a dividing line (28) from which the outer boundary line (23) as well as the inner one (24) diverges in the direction from the first end (20) of the cutting edge toward the second end (21) thereof, the radially outer part surface (26) forming a greater, negative angle (τ) with the upper reference plane (URP) than the inner one.

19. Milling insert according to any one of claims 14-18, **characterized in that** the chamfer surface (22) has a greatest width (W) that is at least twice as large as its smallest width.

20. Milling insert according to claim 18, **characterized in that** the outer part surface (26) of the chamfer surface (22) has a width (W1), which in sections closest to the first end (20) of the cutting edge is greater than the width (W2) of the inner part surface, but which in sections closer to the second end (21) has a width that is smaller than the width of the inner part surface (27).

21. Milling insert according to any one of claims 14-20, **characterized in that** the arc length of the chamfer surface (22) amounts to at least 75 % of the total arc length that each cutting edge occupies of the 360° periphery of the upper side.

22. Milling insert according to claim 18 or 20, **characterized in that** the angle (τ) of the outer part surface (26) to the upper reference plane (URP) increases in the direction from the first end (20) of the cutting edge toward the second end (21) thereof.

23. Milling insert according to any one of claims 14-22, **characterized in that** said lock means is a connecting surface that is formed in the under side and includes a plurality of radially oriented ridges and countersinks between the same.

24. Milling insert according to any one of claims 14-23, **characterized in that**, in the envelope surface of the individual milling insert (11), a plurality of tangentially spaced-apart side contact surfaces are formed.

25. Milling insert according to claim 23 and 24, **characterized in that** the side contact surfaces of the milling insert are located in the same radial plane as the ridges of the connecting surface.

## Patentansprüche

1. Fräswerkzeug, welches einerseits einen Grundkörper (1) mit einem vorderen und einem hinteren Ende, zwischen denen sich eine Hüllfläche (6) und eine Mittelachse (C1) erstreckt, um die der Grundkörper drehbar ist, und andererseits eine Vielzahl von einseitigen und indexierbaren Fräseinsätzen (2) mit einer runden Grundform aufweist, welche jeweils eine obere Seite (9), eine untere Seite (10) und eine Freifläche (11) aufweisen, wobei sich die Freifläche zwischen diesen erstreckt und zumindest nahe der oberen Seite in die untere Seite (10) so übergeht, dass sie eine positive Schneidengeometrie einer Schneidkante (12), die zwischen der Freifläche (11) und einer von der unteren Seite (9) umfassten Spanfläche (19) angeordnet ist, bereitstellt, wobei die Schneidkante eine verstärkende Fasenfläche (22) aufweist, die von der Freifläche (11) durch eine äußere Grenzlinie (23) und von der Spanfläche (19) durch eine innere Grenzlinie (24) abgegrenzt ist,
wobei der Fräseinsatz (2) mit einer Vielzahl von tangential voneinander beabstandeten Schneidkanten (12) ausgebildet ist und wobei die innere Grenzlinie (24) der Fasenfläche (22) von der äußeren Grenzlinie (23) abweicht, sodass die Fasenfläche (22) in Richtung von dem ersten Ende (20) der Schneidkante zu deren zweitem Ende (21) breiter wird,
wobei die Nennlage der oberen und unteren Seiten (9, 10) in dem Fräseinsatz (2) durch obere und untere Bezugsebenen (URP, LRP) festgelegt ist, von denen jede sich senkrecht zu einer Mittelachse (C2) eines gedachten Zylinders (CY) erstreckt, welcher den Umfang der oberen Seite (9) begrenzt und dadurch eine runde Grundform des Fräseinsatzes (2) definiert,
wobei der jeweilige Fräseinsatz (2) in einem Sitz (4) befestigt ist, welcher an einem Übergang zwischen dem vorderen Ende (5) des Grundkörpers (1) und dessen Hüllfläche (6) ausgebildet ist, genauer mittels einerseits einer Spannvorrichtung (3) und andererseits eines damit zusammenwirkenden Verriegelungselements in dem Sitz des Grundkörpers sowie in dem Fräseinsatz, um einer Drehung des letzteren entgegenzuwirken, wobei der Fräseinsatz in einer räumlichen Position angeordnet ist, welche in dem Grundkörper geneigt ist und durch einen axialen Neigungswinkel (α) sowie einen radialen Neigungswinkel (β) festgelegt ist,
**dadurch gekennzeichnet, dass** die Schneidkanten (12) des Fräseinsatzes (2) jeweils von einem ersten Ende (20), welches der oberen Bezugsebene (URP) des Fräseinsatzes am nächsten liegend angeordnet ist, zu einem untersten Punkt (BP) hin bogenförmig abfallen, von wo sie zu einem zweiten Ende (21) hin ansteigen.

2. Fräswerkzeug nach Anspruch 1, **dadurch gekennzeichnet, dass** die jeweilige Schneidkante (12) des Fräseinsatzes (2) eine spanabhebende Hauptkante bildet, welche an ihrem ersten Ende (20) in eine Schlichtkante (25) übergeht, die - wenn der Fräseinsatz aus einer Ebene auf die obere Fläche betrachtet wird - einen Radius (r1) aufweist, der größer ist als der Radius (r2) der Hauptkante, so wie dies durch die äußere Grenzlinie (23) der Fasenfläche festgelegt ist.

3. Fräswerkzeug nach Anspruch 1 oder 2, **dadurch gekennzeichnet, dass** die jeweilige Schneidkante (12) jedes Fräseinsatzes (2) mit einem Schneidkantenwinkel (η) ausgebildet ist - so wie dies durch den Winkel zwischen der Spanfläche (19) und der Freifläche (11) festgelegt ist -, welcher sich in Richtung von dem ersten Ende (20) zu dem zweiten Ende verringert.

4. Fräswerkzeug nach Anspruch 3, **dadurch gekennzeichnet, dass** der nominelle Spanwinkel (ε) der Schneidkante (12) in Richtung von dem ersten Ende (20) zu dem zweiten Ende (21) zunimmt, während der Freiwinkel (ζ) im Wesentlichen konstant ist.

5. Fräswerkzeug nach einem der vorherigen Ansprüche, **dadurch gekennzeichnet, dass** die Fasenfläche (22) der Schneidkante (12) gebrochen ist, indem sie zwei Teilflächen (26, 27) umfasst, welche voneinander durch eine Trennlinie (28) getrennt sind, von welcher die äußere Grenzlinie (23) sowie die innere Grenzlinie (24) in Richtung von dem ersten Ende (20) der Schneidkante zu dem zweiten Ende (21) auseinanderlaufen, wobei die radial äußere Teilfläche (26) einen größeren, negativen Winkel (τ) mit der oberen Bezugsebene (URP) als die innere Teilfläche (27) ausbildet.

6. Fräswerkzeug nach einem der vorherigen Ansprüche, **dadurch gekennzeichnet, dass** die Fasenfläche (22) der Schneidkante (12) eine größte Breite (W) hat, die zumindest zweimal so groß wie ihre kleinste Breite ist.

7. Fräswerkzeug nach Anspruch 5, **dadurch gekennzeichnet, dass** die äußere Teilfläche (26) der Fasenfläche (22) eine Breite (W1) hat, welche abschnittsweise am nächsten zu dem ersten Ende (20) der Schneidkante größer ist als die Breite der inneren Teilfläche (27), welche aber abschnittsweise näher zu dem zweiten Ende (21) eine Breite (W1) hat, die kleiner als die Breite (W2) der inneren Teilfläche (27) ist.

8. Fräswerkzeug nach einem der vorherigen Ansprüche, **dadurch gekennzeichnet, dass** die Fasenfläche (22) der Schneidkante (12) eine Bogenlänge (b2) von zumindest 75% der gesamten Bogenlänge hat, welche jede Schneidkante (12) von dem 360°-Umfang des Fräseinsatzes einnimmt.

9. Fräswerkzeug nach einem der Ansprüche 5 oder 7, **dadurch gekennzeichnet, dass** der Winkel (τ) der äußeren Teilfläche (26) zu der oberen Bezugsebene (URP) des Fräseinsatzes in Richtung von dem ersten Ende (20) der Schneidkante zu dem zweiten Ende (21) zunimmt.

10. Fräswerkzeug nach einem der vorherigen Ansprüche, **dadurch gekennzeichnet, dass** das Verriegelungselement zur drehbaren Sicherung des Fräseinsatzes (2) in dem jeweiligen Sitz (4) des Grundkörpers einerseits eine erste Sitzfläche aufweist, die auf dem Boden (8) des jeweiligen Sitzes ausgebildet ist und eine Vielzahl von radial ausgerichteten Rippen (16) und Einsenkungen (17) zwischen diesen umfasst, und andererseits eine zweite Sitzfläche aufweist, welche auf der unteren Seite des Fräseinsatzes ausgebildet ist und in gleicher Weise Rippen und Einsenkungen umfasst, von denen die zuerst erwähnten in die Einsenkungen der ersten Sitzfläche einrasten und gleichzeitig die zuletzt erwähnten die Rippen der ersten Sitzfläche aufnehmen.

11. Fräswerkzeug nach einem der vorherigen Ansprüche, **dadurch gekennzeichnet, dass** auf der Hüllfläche des jeweiligen Fräseinsatzes eine Vielzahl von tangential voneinander beabstandeten Seitenauflageflächen ausgebildet sind, von denen zwei gegen jede der Seitenstützflächen in den Sitz gedrückt werden.

12. Fräswerkzeug nach Anspruch 10 oder 11, **dadurch gekennzeichnet, dass** die Seitenauflageflächen des Fräseinsatzes in der gleichen radialen Ebene wie die Rippen der Sitzfläche des Fräseinsatzes angeordnet sind.

13. Fräswerkzeug nach einem der vorherigen Ansprüche, **dadurch gekennzeichnet, dass** die betriebsbereite Schneidkante (12) des Fräseinsatzes (2) mit ihrem ersten Ende (20) in einem größeren Abstand von dem hinteren Ende des Grundkörpers (1) angeordnet ist als mit ihrem zweiten Ende (21), und die betriebsbereite Schneidkante (12) des Fräseinsatzes (2) mit ihrem ersten Ende (20) in einem kürzeren radialen Abstand von der Mittelachse (C1) des Grundkörpers (1) angeordnet ist als mit ihrem zweiten Ende (21).

14. Einseitiger, indexierbarer Fräseinsatz mit einer runden Grundform, welcher umfasst: eine obere Seite (9), eine untere Seite (10) und eine Freifläche (11), wobei sich die Freifläche zwischen diesen erstreckt und zumindest nahe der oberen Seite (9) in die untere Seite (10) übergeht, um eine positive Schneidengeometrie einer Schneidkante (12), die zwischen der Freifläche (11) und einer in der oberen Seite (9) enthaltenen Spanfläche (19) angeordnet ist, bereitzustellen, wobei die Schneidkante eine verstärkende Fasenfläche (22) aufweist, welche von der Freifläche (11) durch eine äußere Grenzlinie (23) und von der Spanfläche (19) durch eine innere Grenzlinie (24) abgegrenzt ist, wobei die Lage der oberen und unteren Seiten durch eine obere und eine untere Bezugsebene (URP, LRP) festgelegt ist, von denen sich jede senkrecht zu einer Mittelachse (C2) eines gedachten Zylinders (CY) erstreckt, der den Umfang der oberen Seite (9) begrenzt und dadurch die runde Grundform des Fräseinsatzes definiert, wobei der Fräseinsatz ein Verriegelungselement zum Sichern gegenüber einer Drehung des Fräseinsatzes aufweist, wobei der Fräseinsatz mit einer Vielzahl von tangential voneinander beabstandeten Schneidkanten (12) ausgebildet ist, und wobei die innere Grenzlinie (24) der Fasenfläche gegenüber der äußeren Grenzlinie (23) divergiert, um der Fasenfläche (22) eine zunehmende Breite in Richtung von dem ersten Ende (20) der Schneidkante zu deren zweitem Ende (21) zu geben,
**dadurch gekennzeichnet, dass** die Schneidkanten (12) jeweils von einem ersten Ende (20), welches der oberen Bezugsebene (URP) am nächsten liegend angeordnet ist, zu einem untersten Punkt (BP) hin bogenförmig abfallen, von wo sie zu einem zweiten Ende (21) hin ansteigen.

15. Fräseinsatz nach Anspruch 14, **dadurch gekennzeichnet, dass** die Schneidkante eine spanabhebende Hauptkante (12) bildet, welche an ihrem ersten Ende (20) in eine Schlichtkante (25) übergeht, die - wenn der Fräseinsatz in einer ebenen Draufsicht auf die obere Seite betrachtet wird - einen Radius (r1) hat, der größer als der Radius (r2) der Hauptkante ist, so wie dies durch die äußere Grenzlinie (23) der Fasenfläche festgelegt ist.

16. Fräseinsatz nach Anspruch 14 oder 15, **dadurch gekennzeichnet, dass** die jeweilige Schneidkante (12) jedes Fräseinsatzes (2) mit einem Schneidkantenwinkel (η) ausgebildet ist - so wie dies durch den Winkel zwischen der Spanfläche (19) und der Freifläche (11) definiert ist -, welcher in Richtung von dem ersten Ende (20) zu dem zweiten Ende (21) abnimmt.

17. Fräseinsatz nach einem der Ansprüche 14 - 16, **dadurch gekennzeichnet, dass** der nominelle Spanwinkel (ε) der Schneidkante (12) in Richtung von dem ersten Ende (20) zu dem zweiten Ende (21) zunimmt, während der Freiwinkel (ζ) im Wesentlichen konstant ist.

18. Fräseinsatz nach einem der Ansprüche 14 - 17, **dadurch gekennzeichnet, dass** die jeweilige Fasenfläche (22) gebrochen ist, indem sie zwei Teilflächen (26, 27) umfasst, welche voneinander durch eine Trennlinie (28) getrennt sind, von welcher aus die äußere Grenzlinie (23) sowie die innere Grenzlinie (24) in Richtung von dem ersten Ende (20) der Schneidkante zu deren zweitem Ende (21) divergieren, wobei die radial äußere Teilfläche (26) einen größeren, negativen Winkel (τ) mit der oberen Bezugsebene (URP) ausbildet als die innere Teilfläche (27).

19. Fräseinsatz nach einem der Ansprüche 14 - 18, **dadurch gekennzeichnet, dass** die Fasenfläche (22) der Schneidkante (12) eine größte Breite (W) hat, die zumindest zweimal so groß wie ihre kleinste Breite ist.

20. Fräseinsatz nach Anspruch 18, **dadurch gekennzeichnet, dass** die äußere Teilfläche (26) der Fasenfläche (22) eine Breite (W1) hat, welche in Abschnitten, welche am nächsten zu dem ersten Ende (20) der Schneidkante liegen, größer ist als die Breite (W2) der inneren Teilfläche (27), welche jedoch in Abschnitten, welche näher zu dem zweiten Ende (21) liegen, eine Breite hat, die kleiner als die Breite der inneren Teilfläche (27) ist.

21. Fräseinsatz nach einem der Ansprüche 14 - 20, **dadurch gekennzeichnet, dass** die Bogenlänge der Fasenfläche (22) mindestens 75% der gesamten Bogenlänge beträgt, welche jede Schneidkante (12) von dem 360°-Umfang der oberen Seite einnimmt.

22. Fräseinsatz nach Anspruch 18 oder 20, **dadurch gekennzeichnet, dass** der Winkel (τ) der äußeren Teilfläche (26) zu der oberen Bezugsebene (URP) in Richtung von dem ersten Ende (20) der Schneidkante zu deren zweitem Ende (21) zunimmt.

23. Fräseinsatz nach einem der Ansprüche 14 - 22, **dadurch gekennzeichnet, dass** das Verschlusselement eine Sitzfläche ist, die auf der unteren Seite ausgebildet ist und eine Vielzahl von radial ausgerichteten Rippen und Einsenkungen zwischen diesen umfasst.

24. Fräseinsatz nach einem der Ansprüche 14 - 23, **dadurch gekennzeichnet, dass** auf der Hüllfläche des jeweiligen Fräseinsatzes (2) eine Vielzahl von tangential voneinander beabstandeten Seitenanlageflächen ausgebildet sind.

25. Fräseinsatz nach Anspruch 23 oder 24, **dadurch gekennzeichnet, dass** die Seitenanlageflächen des Fräseinsatzes in der gleichen radialen Ebene wie die Rippen der Sitzfläche angeordnet sind.

## Revendications

1. Outil de fraisage comprenant d'une part un corps de base (1) ayant des extrémités avant et arrière, entre lesquelles s'étend une surface d'enveloppe (6) et un axe central (C1) sur lequel le corps de base peut tourner, et d'autre part une pluralité de plaquettes de fraisage simple face et indexables (2) ayant une forme de base ronde, qui comprennent individuellement un côté supérieur (9), un côté inférieur (10), et une surface de dépouille (11) qui s'étend entre ceux-ci et, au moins à une position la plus proche du côté supérieur (9), converge en direction du côté inférieur (10) de manière à fournir une géométrie de coupe positive d'une arête de coupe (12) positionnée entre la surface de dépouille (11) et une surface à copeaux (19) incluse dans le côté supérieur (9), laquelle arête de coupe inclut une surface de chanfrein de renfort (22) qui est délimitée contre la surface de dépouille (11) par le biais d'une ligne limite extérieure (23) et contre la surface à copeaux (19) par le biais d'une ligne limite intérieure (24), dans lequel la plaquette de fraisage (2) est formée avec une pluralité d'arêtes de coupe écartées tangentiellement (12), et dans lequel la ligne limite intérieure (24) de la surface de chanfrein (22) divergeant par rapport à la ligne limite extérieure (23) de manière à donner à la surface de chanfrein une largeur croissante dans la direction de la première extrémité (20) de l'arête de coupe vers la deuxième extrémité (21) de celle-ci,
la situation nominale des côtés supérieur et inférieur (9, 10) dans la plaquette de fraisage (2) étant déterminée par des plans de référence supérieur et inférieur (URP, LRP), dont chacun s'étend perpendiculairement à un axe central (C2) d'un cylindre imaginaire (CY) qui circonscrit la périphérie du côté supérieur (9) et définit de cette manière la forme de base ronde de la plaquette fraisage (2),
la plaquette fraisage individuelle (2) étant fixée dans un logement (4) formé dans une transition entre l'extrémité avant (5) du corps de base (1) et la surface d'enveloppe (6) de celui-ci, plus précisément au moyen, d'une part, d'un dispositif de serrage (3), et d'autre part d'un moyen de verrouillage coopérant dans le logement du corps de base ainsi que dans la plaquette de fraisage de manière à contrer une rotation de cette dernière, la plaquette de fraisage étant située à une position spatiale qui est inclinée dans le corps de base et déterminée par un angle d'inclinaison (α) ainsi que par un angle radial (β), **caractérisé en ce que** les arêtes de coupe (12) de la plaquette de fraisage (2) descendent individuellement de manière arquée à partir d'une première extrémité (20), située la plus proche du plan de référence supérieur (URP) de la plaquette de fraisage, jusqu'à un point le plus bas (BP), à partir duquel elles remontent en direction d'une deuxième extrémité (21).

2. Outil de fraisage selon la revendication 1, **caractérisé en ce que** l'arête de coupe individuelle (12) de la plaquette de fraisage (2) forme une arête principale d'enlèvement de copeaux, qui au niveau de sa première extrémité (20) se transforme en une arête de balayage (25), qui - lorsque la plaquette de fraisage est observée dans une vue en élévation en plan en direction du côté supérieur - a un rayon (r1) qui est supérieur au rayon (r2) de l'arête principale, comme cela est déterminé par la ligne limite extérieure (23) de la surface de chanfrein.

3. Outil de fraisage selon la revendication 1 ou 2, **caractérisé en ce que** l'arête de coupe individuelle (12) de chaque plaquette de fraisage (2) est formée avec un angle d'arête de coupe (η) - comme cela est défini par l'angle entre la surface à copeaux (19) et la surface de dépouille (11) - qui diminue dans la direction de la première extrémité (20) vers la deuxième (21).

4. Outil de fraisage selon la revendication 3, **caractérisé en ce que** l'angle d'attaque nominal (ε) de l'arête de coupe (12) augmente dans la direction de la première extrémité (20) vers la deuxième (21), alors que l'angle de dépouille (ζ) est essentiellement constant.

5. Outil de fraisage selon l'une quelconque des revendications précédentes, **caractérisé en ce que** la surface de chanfrein (22) de l'arête de coupe (12) est discontinue en incluant deux surfaces partielles (26, 27) qui sont séparées par une ligne de séparation (28) à partir de laquelle la ligne limite extérieure (23) ainsi que la ligne limite intérieure (24) divergent dans la direction de la première extrémité (20) de l'arête de coupe vers la deuxième (21), la surface partielle radialement extérieure (26) formant un angle négatif supérieur (τ) avec le plan de référence supérieur (URP) par rapport à la surface partielle intérieure (27).

6. Outil de fraisage selon l'une quelconque des revendications précédentes, **caractérisé en ce que** la surface de chanfrein (22) de l'arête de coupe (12) a une largeur la plus grande (W) qui est au moins deux fois aussi grande que sa largeur la plus petite.

7. Outil de fraisage selon la revendication 5, **caractérisé en ce que** la surface partielle extérieure (26) de la surface de chanfrein (22) a une largeur (W1), qui dans des sections les plus proches de la première extrémité (20) de l'arête de coupe est supérieure à la largeur de la surface partielle intérieure (27), mais qui dans des sections plus proches de la deuxième extrémité (21) a une largeur (W1) qui est inférieure à la largeur (W2) de la surface partielle intérieure (27).

8. Outil de fraisage selon l'une quelconque des revendications précédentes, **caractérisé en ce que** la surface de chanfrein (22) de l'arête de coupe (12) a une longueur d'arc (b2) d'au moins 75 % de la longueur d'arc totale que chaque arête de coupe (12) occupe de la périphérie à 360° de la plaquette de fraisage.

9. Outil de fraisage selon la revendication 5 ou 7, **caractérisé en ce que** l'angle (τ) de la surface partielle extérieure (26) par rapport au plan de référence supérieur (URP) de la plaquette de fraisage augmente dans la direction de la première extrémité (20) de l'arête de coupe vers la deuxième (21).

10. Outil de fraisage selon l'une quelconque des revendications précédentes, **caractérisé en ce que** le moyen de verrouillage destiné à fixer en rotation la plaquette de fraisage (2) dans le logement (4) individuel du corps de base comprend d'une part une première surface de connexion qui est formée dans un fond (8) du logement individuel et inclut une pluralité de nervures orientées radialement (16) et de fraisures (17) entre celles-ci, et d'autre part une deuxième surface de connexion qui est formée dans le côté inférieur de la plaquette de fraisage et de la même manière inclut des nervures et des fraisures, les premières mentionnées s'engagent avec les fraisures de la première surface de connexion en même temps que les dernières mentionnées reçoivent les nervures de la première surface de connexion.

11. Outil de fraisage selon l'une quelconque des revendications précédentes, **caractérisé en ce que**, dans la surface d'enveloppe de la plaquette de fraisage individuelle, une pluralité de surfaces de contact latérales écartées tangentiellement sont formées, dont deux sont appuyées sur chaque surface de support latérale dans le logement.

12. Outil de fraisage selon les revendications 10 et 11, **caractérisé en ce que** les surfaces de contact latérales de la plaquette de fraisage sont situées dans le même plan radial que les nervures de la surface de connexion de la plaquette de fraisage.

13. Outil de fraisage selon l'une quelconque des revendications précédentes, **caractérisé en ce que** l'arête de coupe (12) active de la plaquette de fraisage (2) a sa première extrémité (20) située à une distance axiale supérieure par rapport à l'extrémité arrière du corps de base (1) que sa deuxième extrémité (21), et l'arête de coupe (12) active de la plaquette de fraisage (2) ayant sa première extrémité (20) située à une distance radiale plus courte par rapport à l'axe central (C1) du corps de base (20) que sa deuxième extrémité (21).

14. Plaquette de fraisage indexable, simple face ayant une forme de base ronde comprenant un côté supérieur (9), un côté inférieur (10), et une surface de dépouille (11) qui s'étend entre ceux-ci et, au moins à une position la plus proche du côté supérieur (9), converge en direction du côté inférieur (10) de manière à fournir une géométrie de coupe positive d'une arête de coupe (12) positionnée entre la surface de dépouille (11) et une surface à copeaux (19) incluse dans le côté supérieur (9), laquelle arête de coupe inclut une surface de chanfrein de renfort (22) qui est délimitée contre la surface de dépouille (11) par le biais d'une ligne limite extérieure (23) et contre la surface à copeaux (19) par le biais d'une ligne limite intérieure (24), la situation des côtés supérieur et inférieur étant définie par des plans de référence supérieur et inférieur (URP, LRP), dont chacun s'étend perpendiculairement à un axe central (C2) d'un cylindre imaginaire (CY) qui circonscrit la périphérie du côté supérieur (9) et définit de cette manière la forme de base ronde de la plaquette fraisage, la plaquette fraisage individuelle incluant un moyen de verrouillage destiné à fixer en rotation celle-ci, dans lequel la plaquette de fraisage est formée avec une pluralité d'arêtes de coupe écartées tangentiellement (12), et dans lequel la ligne limite intérieure (24) de la surface de chanfrein divergeant par rapport à la ligne limite extérieure (23) pour donner à la surface de chanfrein (22) une largeur croissante dans la direction de la première extrémité (20) de l'arête de coupe vers la deuxième extrémité (21) de celle-ci,
**caractérisé en ce que** les arêtes de coupe (12) descendent individuellement de manière arquée à partir d'une première extrémité (20), située la plus proche du plan de référence supérieur (URP), jusqu'à un point le plus bas (BP), à partir duquel elles remontent en direction d'une deuxième extrémité (21).

15. Plaquette de fraisage selon la revendication 14, **caractérisée en ce que** ladite arête de coupe forme une arête principale d'enlèvement de copeaux (12), qui à sa première extrémité (20) se transforme en une arête de balayage (25), qui - lorsque la plaquette de fraisage est observée dans une vue en élévation en plan en direction du côté supérieur - a un rayon (r1) qui est supérieur au rayon (r2) de l'arête principale, comme cela est déterminé par la ligne limite extérieure (23) de la surface de chanfrein.

16. Plaquette de fraisage selon la revendication 14 ou 15, **caractérisée en ce que** l'arête de coupe individuelle (12) de chaque plaquette de fraisage (2) est formée avec un angle d'arête de coupe (η) - comme cela est défini par l'angle entre la surface à copeaux (19) et la surface de dépouille (11) - qui diminue dans la direction de la première extrémité (20) vers la deuxième (21).

17. Plaquette de fraisage selon l'une quelconque des revendications 14 à 16, **caractérisée en ce que** l'angle d'attaque nominal (ε) de l'arête de coupe (12) augmente dans la direction de la première extrémité (20) vers la deuxième (21), alors que l'angle de dépouille (ζ) est essentiellement constant.

18. Plaquette de fraisage selon l'une quelconque des revendications 14 à 17, **caractérisée en ce que** la surface de chanfrein (22) de l'arête de coupe (12) individuelle est discontinue en incluant deux surfaces partielles (26, 27) qui sont séparées par une ligne de séparation (28) à partir de laquelle la ligne limite extérieure (23) ainsi que la ligne limite intérieure (24) divergent dans la direction de la première extrémité (20) de l'arête de coupe vers la deuxième (21), la surface partielle radialement extérieure (26) formant un angle négatif supérieur (τ) avec le plan de référence supérieur (URP) par rapport à la surface partielle intérieure.

19. Plaquette de fraisage selon l'une quelconque des revendications 14 à 18, **caractérisée en ce que** la surface de chanfrein (22) a une largeur la plus grande (W) qui est au moins deux fois aussi grande que sa largeur la plus petite.

20. Plaquette de fraisage selon la revendication 18, **caractérisée en ce que** la surface partielle extérieure (26) de la surface de chanfrein (22) a une largeur (W1), qui dans des sections les plus proches de la première extrémité (20) de l'arête de coupe est supérieure à la largeur (W2) de la surface partielle intérieure, mais qui dans des sections plus proches de la deuxième extrémité (21) a une largeur qui est inférieure à la largeur de la surface partielle intérieure (27).

21. Plaquette de fraisage selon l'une quelconque des revendications 14 à 20, caractérisée ce que la longueur d'arc de la surface de chanfrein (22) est d'au moins 75 % de la longueur d'arc totale que chaque arête de coupe occupe de la périphérie à 360° du côté supérieur.

22. Plaquette de fraisage selon la revendication 18 ou 20, **caractérisée en ce que** l'angle (τ) de la surface partielle extérieure (26) par rapport au plan de référence supérieur (URP) augmente dans la direction de la première extrémité (20) de l'arête de coupe vers la deuxième (21).

23. Plaquette de fraisage selon l'une quelconque des revendications 14 à 22, **caractérisée en ce que** ledit moyen de verrouillage est une surface de connexion qui est formée dans le côté inférieur et inclut une pluralité de nervures orientées radialement et de fraisures entre celles-ci.

24. Plaquette de fraisage selon l'une quelconque des revendications 14 à 23, **caractérisée en ce que**, dans la surface d'enveloppe de la plaquette de fraisage individuelle (11), une pluralité de surfaces de contact latérales écartées tangentiellement sont formées.

25. Plaquette de fraisage selon les revendications 23 et 24, **caractérisée en ce que** les surfaces de contact latérales de la plaquette de fraisage sont situées dans le même plan radial que les nervures de la surface de connexion.
